# EUROPEAN PATENT SPECIFICATION

(11) **EP 3 419 865 B1**
(45) Date of publication and mention of the grant of the patent: **13.11.2019**
(21) Application number: 17707547.0
(22) Date of filing: 27.02.2017
(51) Int. Cl.: B60R 25/0215

(54) **A STEERING COLUMN LOCK DEVICE FOR AN AUTOMOTIVE VEHICLE**
LENKSÄULENSCHLOSSVORRICHTUNG FÜR EIN KRAFTFAHRZEUG
DISPOSITIF DE VERROUILLAGE DE COLONNE DE DIRECTION POUR UN VÉHICULE AUTOMOBILE

(30) Priority: 25.02.2016 EP 16157273
(43) Date of publication of application: 02.01.2019
(73) Proprietor: U-Shin Deutschland Zugangssysteme GmbH, 85253 Erdweg (DE)
(72) Inventor: GRENOUILLAT, Régis, 85253 Erdweg (DE); LAVAL, Anthony, 85253 Erdweg (DE)
(74) Representative: Verriest, Philippe
(86) International application number: PCT/EP2017/054485
(87) International publication number: WO 2017/144718

(56) References cited:
- EP-A1- 2 716 508
- EP-A2- 1 176 065
- WO-A1-2014/140124
- GB-A- 2 401 595
- US-A1- 2008 087 056

## Description

The invention relates to a steering column lock device for an automotive vehicle. Such a device is configured to lock and unlock a steering column.

In addition, the invention relates to an electrical steering column lock for an automotive vehicle comprising such steering column lock device.

An electrical steering column lock used in an automotive vehicle usually comprises an electrical motor for controlling the movement of a lockbolt from an engaged position in which the lockbolt locks the steering column, and a disengaged position in which the lockbolt unlocks the steering column. In particular, the steering column is blocked in rotation when the lockbolt is in the engaged position, and unblocked in rotation when the lockbolt is in the disengaged position.

There is a need to facilitate the use of the electrical steering column lock by providing improvement to mechanical relationship between the parts of the electrical steering column lock in particular during the disengagement from the lock position.

A steering column lock device according to the prior art as described in e.g. EP 2 716 508 comprises a camwheel driving a bolt with a plurality of cam profiles having a variable slope, so as to have a variable unlocking force along the cam profiles.

An object of the invention is to propose an alternative and improved means to have a variable unlocking force.

A further object of the invention is to control more accurately the position of the contact point between the lockbolt and the camwheel.

To this end, the invention relates to a steering column lock device for an automotive vehicle comprising:
- a lockbolt having a contact member, the lockbolt being configured to be driven between an engaged position in which the lockbolt locks a steering column, and a disengaged position in which the lockbolt releases the steering column,
- a camwheel movable in rotation around a rotation axis, the camwheel comprising at least one cam profile having a circular contact surface, the circular contact surface having a variable radius with respect to the rotational axis of the camwheel,
wherein the contact member is configured to cooperate with the circular contact surface such that the lockbolt is driven between the engaged position and the disengaged position by the rotation of the camwheel.

Advantageously, the variable radius enables to use a variable unlocking force to adapt the use of the steering column lock device. The invention makes it possible to control more accurately the position of the contact point of the contact member and therefore of the reaction torque applied by the contact member onto the camwheel.

According to further embodiments which can be considered alone or in combination:
- the circular contact surface having a variable radius is configured to drive the lockbolt from the engaged position to the disengaged position, and wherein the variable radius is a decreasing radius when the lockbolt is driven from the engaged position to the disengaged position by the rotation of the camwheel; and/or
- the at least one cam profile has an increasing slope when the lockbolt is driven from the engaged position to the disengaged position by the rotation of the camwheel; and/or
- the camwheel comprises a plurality of cam profiles, each cam profile having a circular contact surface with a specific cam slope; and/or
- successive cam profiles of the plurality of cam profiles have successive increasing slopes when the lockbolt is driven from the engaged position to the disengaged position by the rotation of the camwheel; and/or
- a middle cam profile, placed between a first cam profile and a third cam profile, has the variable radius; and/or
- the width of the circular contact surface which has a variable radius is lower than the width of the first and third cam profiles; and/or
- the contact member is configured to cooperate with a circular contact surface of the second cam profile such that the lockbolt is driven between the disengaged position, and a rest position in which the lockbolt is away from the steering column relative to the disengaged position, by the rotation of the camwheel; and wherein the contact member is configured to cooperate with a circular contact surface of the first cam profile such that the lockbolt is in the engaged position by the rotation of the camwheel; and/or
- the camwheel comprises three different successive cam profiles.

Advantageously, the plurality of cam profiles with specific slopes enables to use a variable unlocking force and a variable unlocking speed to adapt the use of the steering column lock device.

Furthermore, the invention relates to an electrical steering column lock for an automotive vehicle comprising:
- the steering column lock device according to the invention, and
- an electrical motor for activating the camwheel.

Furthermore, the invention relates to an automotive vehicle comprising the electrical steering column lock according to the invention.

Other features and advantages of the present invention will become apparent from the following description of a non-limitative embodiment, with reference to the attached drawing in which:
- figure 1 is a perspective view of a camwheel of the steering column lock device of the invention, and
- figure 2 is a schematic side view of the steering column lock device of the invention cooperating with a steering column in the engaged position,
- figure 3 is a schematic side view of a steering column and of the steering column lock device of the invention in the disengaged position, and
- figure 4 is a schematic side view of a steering column and of the steering column lock device of the invention in the rest position.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

The invention relates to a steering column lock device for an automotive vehicle, comprising a lockbolt and a camwheel.

The lockbolt is configured to be driven between an engaged position in which the lockbolt locks a steering column, and a disengaged position in which the lockbolt releases the steering column.

In addition, the lockbolt may be driven in a rest position in which the lockbolt is away from the steering column relative to the disengaged position.

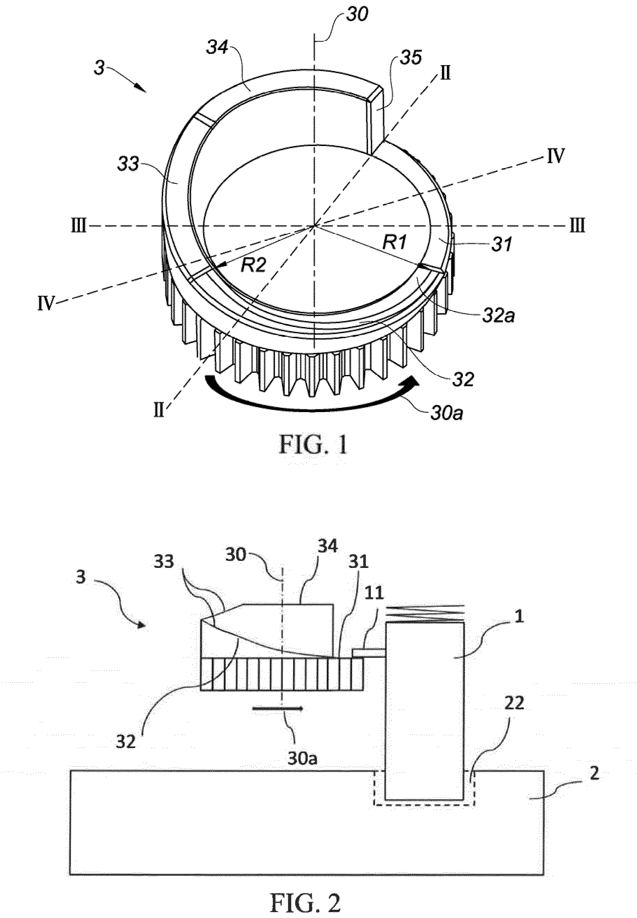

Figure 1 represents a camwheel 3 of steering column lock device of the invention.

The camwheel 3 is movable in rotation around a rotation axis, numbered 30 in figure 1. The rotation of the camwheel 3 allows driving the lockbolt from the engaged position to the disengaged position, then to the rest position, and then to the engaged position. In particular, in figure 1, the camwheel 3 rotates in the direction of the arrow 30a. A symmetrical device may be configured to rotate in the opposite direction of the direction of the arrow 30a.

The camwheel 3 comprises at least one cam profile having a circular contact surface.

The circular contact surface of the cam profile has a variable radius with respect to the rotational axis 30 of the camwheel 3. As illustrated in figure 1, the circular contact surface 32 has a variable radius R1, R2 relative to the axis 30.

The lockbolt 1 has a contact member 11, as represented in figures 2 to 4.

The contact member 11 is configured to cooperate with the circular contact surface 32 having a variable radius R1, R2 such that the lockbolt 1 is driven between the engaged position and the disengaged position by the rotation of the camwheel 3.

In particular, the circular contact surface 32 having a variable radius R1, R2 is configured to drive the lockbolt 1 from the engaged position to the disengaged position. In other words, the cooperation of the contact member 11 and the circular contact surface 32 allows disengaging the lockbolt from the steering column.

Advantageously, the variable radius enables to use a variable unlocking force to adapt the use of the steering column lock device.

According to an embodiment of the invention, as represented in figure 1, the variable radius R1, R2 is a decreasing radius when the lockbolt 1 is driven from the engaged position to the disengaged position by the rotation of the camwheel 3. In other words, the circular contact surface 32 comes closer to the rotation axis 30 by the rotation of the camwheel 3 in the direction of the arrow 30a. It will be noted that the circular contact surface 32 protrudes from a surface 32a of the camwheel, and has a width lower than the general thickness of the camwheel.

In particular, the variable radius R1, R2 may be strictly decreasing when the lockbolt 1 is driven from the engaged position to the disengaged position by the rotation of the camwheel 3.

According to an embodiment of the invention, the cam profile has an increasing slope when the lockbolt 1 is driven from the engaged position to the disengaged position by the rotation of the camwheel 3. In other words, the cam slope of the cam profile is increasing with the rotation of the camwheel 3 in the direction of the arrow 30a.

In particular, the cam profile may have a strictly increasing slope when the lockbolt 1 is driven from the engaged position to the disengaged position by the rotation of the camwheel 3.

According to an embodiment of the invention, the camwheel 3 comprises a plurality of cam profiles, for instance four cam profiles as illustrated on figure 1.

Each cam profile has a circular contact surface. In figure 1, the first cam profile has a circular contact surface 31, the second cam profile has a circular contact surface 32, the third cam profile has a circular contact surface 33 and the fourth cam profile has a circular contact surface 34.

In particular, the plurality of cam profiles, and more precisely the circular contact surfaces of the plurality of cam profiles, are successive. In other words, the contact member 11 is configured to cooperate with the first circular contact surface 31, then with the second circular contact surface 32, then to the third circular contact surface 33, and then with the fourth circular contact surface 34. With the cooperation of the contact member 11 with the successive circular contact surfaces, the lockbolt is driven from the engaged position to the disengaged position, and to the rest position. It will be noted that the width of the second circular contact surface 32 is lower than the width of the first, third and fourth circular contact surfaces 31, 33, 34. The lowered width of the second circular contact surface 32 allows controlling the contact point with the contact member 11 more accurately. As a consequence, the reaction torque applied by the contact member 11 onto the camwheel 3 is also more accurately controlled, since the distance between is the rotation center of the camwheel 3 and the contact point with the contact member is set by the radius of the circular contact surface 32.

The circular contact surface of each cam profile have a specific cam slope. For instance, the cam slopes of the first and the fourth cam profiles are null, whereas the cam slopes of the second and third cam profiles are increasing with the rotation of the camwheel 3 in the direction of the arrow 30a.

Advantageously, the plurality of cam profiles with specific slopes allows varying the unlocking force and the unlocking speed, so as to facilitate the unlocking of steering column.

Figure 2 represents a steering column lock device of the invention in the engaged position cooperating with the steering column 2.

According to an embodiment of the invention, the portion 22 of the steering column receives the lockbolt 1 of the steering column lock device.

As represented in figure 2, by the rotation of the camwheel 3, the contact member 11 is configured to cooperate with the circular contact surface 31 such that the lockbolt 1 is in the engaged position.

In particular, the cam slope of the first cam profile is null such that the lockbolt 1 remains in the engaged position when the contact member 11 cooperates with the circular contact surface 31 by the rotation of the camwheel 3.

In other words, the engaged position corresponds to the position where the contact member 11 cooperates with the circular contact surface 31.

Then, as described previously, the contact member 11 cooperates with the circular contact surface 32 such that the lockbolt 1 passes from the engaged position to the disengaged position by the rotation of the camwheel 3.

More precisely, the second cam profile having the circular contact surface 32 is a middle cam profile, placed between a first cam profile having the circular contact surface 31 and the third cam profile having the circular contact surface 33.

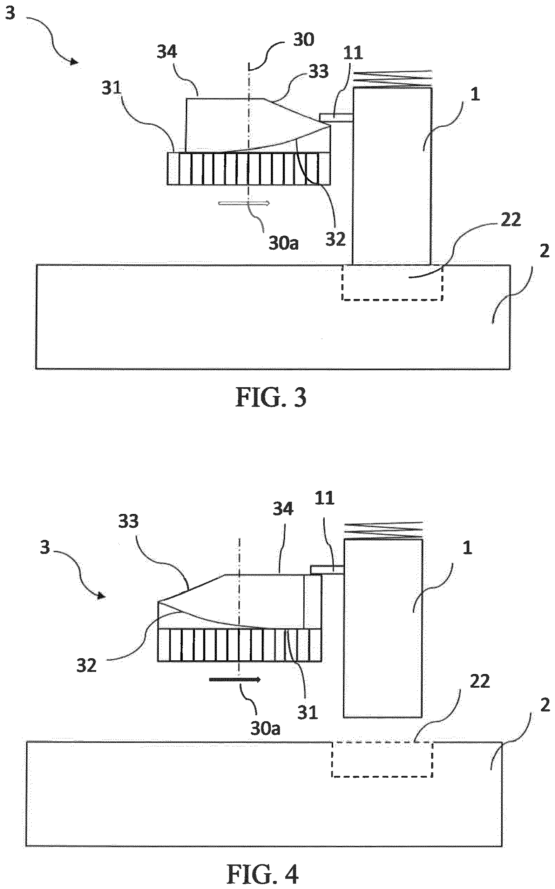

Figure 3 represents a steering column 2 and a steering column lock device of the invention in the disengaged position.

The lockbolt 1 is out of the portion 22 of the steering column.

As represented in figure 3, by the rotation of the camwheel 3, the contact member 11 is configured to cooperate with the circular contact surface 33 such that the lockbolt 1 is driven between the disengaged position and the rest position.

In particular, the cam slope of the third cam profile is increasing when the lockbolt 1 passes from the disengaged position to the rest position by the rotation of the camwheel 3.

In other words, the passage from the disengaged position to the rest position corresponds to the position where the contact member 11 cooperates with the circular contact surface 33.

Figure 4 represents a steering column 2 and a steering column lock device of the invention in the rest position.

The lockbolt 1 is away from the portion 22 of the steering column relative to the disengaged position.

As represented in figure 4, by the rotation of the camwheel 3, the contact member 11 cooperates with the circular contact surface 34 such that the lockbolt 1 is in the rest position.

In particular, the cam slope of the fourth cam profile is null such that the lockbolt 1 remains in the rest position when the contact member 11 cooperates with the circular contact surface 34 by the rotation of the camwheel 3.

In other words, the rest position corresponds to the position where the contact member 11 cooperates with the circular contact surface 34.

By the rotation of the camwheel 3, such that the lockbolt 1 is driven from the rest position to the engaged position, the contact member 11 is configured to cooperate with the circular contact surface 34, and then with the circular contact surface 31.

The first and the fourth cam profiles may be similar cam profiles. Specifically, such cam profiles may have the same slope. As illustrated in figure 1, the cam slopes of the first and fourth cam profiles are null.

The circular contact surface 31 and the circular contact surface 34 are separated with a cam portion 35. In figure 1, the cam portion 35 is a vertical portion. In particular, when the lockbolt is driven from the rest position to the engaged position, the contact member 11 passes from the circular contact surface 34 to the circular contact surface 31. The cam portion 35 allows joining the circular contact surface 34 and the circular contact surface 31.

According to an embodiment of the invention, the successive cam profiles have slopes increasing when the lockbolt 1 is driven from the engaged position to the disengaged position by the rotation of the camwheel 3.

In other words, the cam slope increases between the successive cam profiles. For example, the first, second and third cam profiles have successive increasing slopes when the lockbolt 1 is driven from the engaged position to the disengaged position by the rotation of the camwheel 3.

In such embodiment, the cam slope of the second cam profile is greater than the cam slope of the first cam profile, and the cam slope of the third cam profile is greater than the cam slope of the second cam profile.

A cam slope of the third cam profile greater than the cam slope of the second cam profile enables to use a variable unlocking speed to adapt the use of the steering column lock device. Such variable unlocking speed also allows getting the lockbolt away from the steering column.

Specifically, successive cam profiles may have successive strictly increasing slopes when the lockbolt 1 is driven from the engaged position to the disengaged position by the rotation of the camwheel 3.

According to an embodiment of the invention, the camwheel 3 comprises three different successive cam profiles.

For example, the camwheel 3 comprises the first, the second and the third cam profiles, which are successive and different cam profiles. As another example, the camwheel 3 comprises the second, the third and the fourth cam profiles, which are successive and different cam profiles.

In such embodiment, the successive different profiles have different slopes.

The invention further relates to an electrical steering column lock for an automotive vehicle comprising the steering column lock device as previously described.

The electrical steering column lock further comprises an electrical motor for activating the camwheel.

The invention further relates to an automotive vehicle comprising an electrical steering column lock as previously described.

The invention has been described above with the aid of embodiments without limitation of the general inventive concept as defined in the claims. In particular, the different embodiments are compatible with one another.

Many modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A steering column lock device for an automotive vehicle comprising:
- a lockbolt (1) having a contact member (11), the lockbolt (1) being configured to be driven between an engaged position in which the lockbolt (1) locks a steering column (2), and a disengaged position in which the lockbolt (1) releases the steering column (2),
- a camwheel (3) movable in rotation around a rotation axis (30), the camwheel (3) comprising a plurality of cam profiles, each cam profile having a circular contact surface (31, 32, 33), the circular contact surface (32) having a variable radius (R1, R2) with respect to the rotational axis (30) of the camwheel (3), wherein a middle cam profile, placed between a first cam profile and a third cam profile, has the variable radius (R1, R2) and the width of the circular contact surface (32) which has a variable radius (R1, R2) is lower than the width of the first and third cam profiles,
the contact member (11) is configured to cooperate with the circular contact surface (32) such that the lockbolt (1) is driven between the engaged position and the disengaged position by the rotation of the camwheel (3).

2. A steering column lock device according to the preceding claim, wherein the circular contact surface (32) having a variable radius (R1, R2) is configured to drive the lockbolt (1) from the engaged position to the disengaged position, and wherein the variable radius (R1, R2) is a decreasing radius when the lockbolt (1) is driven from the engaged position to the disengaged position by the rotation of the camwheel (3).

3. A steering column lock device according to any of the preceding claims, wherein the at least one cam profile has an increasing slope when the lockbolt (1) is driven from the engaged position to the disengaged position by the rotation of the camwheel (3).

4. A steering column lock device according to any of the preceding claims, wherein each cam profile have a circular contact surface (31, 32, 33) with a specific cam slope.

5. A steering column lock device according to the preceding claim, wherein successive cam profiles of the plurality of cam profiles have successive increasing slopes when the lockbolt (1) is driven from the engaged position to the disengaged position by the rotation of the camwheel (3).

6. A steering column lock device according to any of the preceding claims, wherein the contact member (11) is configured to cooperate with a circular contact surface (32) of the second cam profile such that the lockbolt (1) is driven between the disengaged position, and a rest position in which the lockbolt (1) is away from the steering column relative to the disengaged position, by the rotation of the camwheel (3); and wherein the contact member (11) is configured to cooperate with a circular contact surface (31) of the first cam profile such that the lockbolt (1) is in the engaged position by the rotation of the camwheel (3).

7. A steering column lock device according to any of any of the preceding claims, wherein the camwheel (3) comprises three different successive cam profiles.

8. An electrical steering column lock for an automotive vehicle comprising:
- the steering column lock device according to any of the preceding claims, and
- an electrical motor for activating the camwheel (3).

9. An automotive vehicle comprising the electrical steering column lock according to the preceding claim.

## Patentansprüche

1. Lenksäulenschlossvorrichtung für ein Kraftfahrzeug, umfassend:
- einen Schließbolzen (1), der ein Kontaktglied (11) aufweist, wobei der Schließbolzen (1) dazu konfiguriert ist, zwischen einer eingerückten Stellung, in der der Schließbolzen (1) eine Lenksäule (2) schließt, und einer ausgerückten Stellung getrieben zu werden, in der der Schließbolzen (1) die Lenksäule (2) freigibt,
- eine Nockenscheibe (3), die drehend um eine Drehachse (30) bewegt werden kann, wobei die Nockenscheibe (3) eine Vielzahl von Nockenprofilen umfasst, wobei jedes Nockenprofil eine runde Kontaktfläche (31, 32, 33) aufweist, wobei die runde Kontaktfläche (32) in Bezug auf die Drehachse (30) der Nockenscheibe (3) einen variablen Radius (R1, R2) aufweist, wobei ein mittleres Nockenprofil, das zwischen einem ersten Nockenprofil und einem dritten Nockenprofil platziert ist, den variablen Radius (R1, R2) aufweist, und die Breite der runden Kontaktfläche (32), die einen variablen Radius (R1, R2) aufweist, kleiner ist als die Breite des ersten und dritten Nockenprofils,
das Kontaktglied (11) dazu konfiguriert ist, derart mit der runden Kontaktfläche (32) zusammenzuwirken, dass der Schließbolzen (1) durch die Drehung der Nockenscheibe (3) zwischen der eingerückten Stellung und der ausgerückten Stellung getrieben wird.

2. Lenksäulenschlossvorrichtung nach dem vorstehenden Anspruch, wobei die runde Kontaktfläche (32), die einen variablen Radius (R1, R2) aufweist, dazu konfiguriert ist, den Schließbolzen (1) von der eingerückten Stellung zur ausgerückten Stellung zu treiben, und wobei der variable Radius (R1, R2) ein abnehmender Radius ist, wenn der Schließbolzen (1) durch die Drehung der Nockenscheibe (3) von der eingerückten Stellung zur ausgerückten Stellung getrieben wird.

3. Lenksäulenschlossvorrichtung nach einem der vorstehenden Ansprüche, wobei das mindestens eine Nockenprofil eine zunehmende Steigung aufweist, wenn der Schließbolzen (1) durch die Drehung der Nockenscheibe (3) von der eingerückten Stellung zur ausgerückten Stellung getrieben wird.

4. Lenksäulenschlossvorrichtung nach einem der vorstehenden Ansprüche, wobei jedes Nockenprofil eine runde Kontaktfläche (31, 32, 33) mit einer spezifischen Nockensteigung aufweist.

5. Lenksäulenschlossvorrichtung nach dem vorstehenden Anspruch, wobei aufeinanderfolgende Nockenprofile aus der Vielzahl von Nockenprofilen aufeinanderfolgende zunehmende Steigungen aufweisen, wenn der Schließbolzen (1) durch die Drehung der Nockenscheibe (3) von der eingerückten Stellung zur ausgerückten Stellung getrieben wird.

6. Lenksäulenschlossvorrichtung nach einem der vorstehenden Ansprüche, wobei das Kontaktglied (11) dazu konfiguriert ist, derart mit einer runden Kontaktfläche (32) des zweiten Nockenprofils zusammenzuwirken, dass der Schließbolzen (1) durch die Drehung der Nockenscheibe (3) zwischen der ausgerückten Stellung und einer Ruhestellung getrieben wird, in der sich der Schließbolzen (1) relativ zur ausgerückten Stellung weg von der Lenksäule befindet; und wobei das Kontaktglied (11) dazu konfiguriert ist, derart mit einer runden Kontaktfläche (31) des ersten Nockenprofils zusammenzuwirken, dass sich der Schließbolzen (1) durch die Drehung der Nockenscheibe (3) in der eingerückten Stellung befindet.

7. Lenksäulenschlossvorrichtung nach einem der vorstehenden Ansprüche, wobei die Nockenscheibe (3) drei unterschiedliche aufeinanderfolgende Nockenprofile umfasst.

8. Elektrisches Lenksäulenschloss für ein Kraftfahrzeug, umfassend:
- die Lenksäulenschlossvorrichtung nach einem der vorstehenden Ansprüche, und
- einen Elektromotor zum Betätigen der Nockenscheibe (3).

9. Kraftfahrzeug, das das elektrische Lenksäulenschloss nach dem vorstehenden Anspruch umfasst.

## Revendications

1. Dispositif antivol de colonne de direction pour un véhicule automobile comprenant :
- un verrou (1) ayant un élément de contact (11), le verrou (1) étant configuré pour être entraîné entre une position engagée dans laquelle le verrou (1) verrouille une colonne de direction (2) et une position désengagée dans laquelle le verrou (1) libère la colonne de direction (2),
- une roue à cames (3) mobile en rotation autour d'un axe de rotation (30), la roue à cames (3) comprenant une pluralité de profils de came, chaque profil de came ayant une surface de contact circulaire (31, 32, 33), la surface de contact circulaire (32) ayant un rayon variable (R1, R2) par rapport à l'axe de rotation (30) de la roue à cames (3), où un profil de came central, placé entre un premier profil de came et un troisième profil de came, a le rayon variable (R1, R2) et la largeur de la surface de contact circulaire (32) qui a un rayon variable (R1, R2) est inférieure à la largeur des premier et troisième profils de came,
l'élément de contact (11) est configuré pour coopérer avec la surface de contact circulaire (32) de sorte que le verrou (1) soit entraîné entre la position engagée et la position désengagée par la rotation de la roue à cames (3).

2. Dispositif antivol de colonne de direction selon la revendication précédente, dans lequel la surface de contact circulaire (32) ayant un rayon variable (R1, R2) est configurée pour entraîner le verrou (1) de la position engagée à la position désengagée, et dans lequel le rayon variable (R1, R2) est un rayon décroissant lorsque le verrou (1) est entraîné de la position engagée à la position désengagée par la rotation de la roue à cames (3).

3. Dispositif antivol de colonne de direction selon l'une des revendications précédentes, dans lequel l'au moins un profil de came a une pente croissante lorsque le verrou (1) est entraîné de la position engagée à la position désengagée par la rotation de la roue à cames (3).

4. Dispositif antivol de colonne de direction selon l'une des revendications précédentes, dans lequel chaque profil de came a une surface de contact circulaire (31, 32, 33) ayant une pente de came spécifique.

5. Dispositif antivol de colonne de direction selon la revendication précédente, dans lequel des profils de came successifs de la pluralité de profils de came ont des pentes croissantes successives lorsque le verrou (1) est entraîné de la position engagée à la position désengagée par la rotation de la roue à cames (3).

6. Dispositif antivol de colonne de direction selon l'une des revendications précédentes, dans lequel l'élément de contact (11) est configuré pour coopérer avec une surface de contact circulaire (32) du deuxième profil de came de sorte que le verrou (1) soit entraîné entre la position désengagée et une position de repos dans laquelle le verrou (1) est éloigné de la colonne de direction par rapport à la position désengagée, par la rotation de la roue à cames (3) ; et dans lequel l'élément de contact (11) est configuré pour coopérer avec une surface de contact circulaire (31) du premier profil de came de sorte que le verrou (1) soit en position engagée par la rotation de la roue à cames (3).

7. Dispositif antivol de colonne de direction selon l'une des revendications précédentes, dans lequel la roue à cames (3) comprend trois profils de came successifs différents.

8. Antivol électrique de colonne de direction pour un véhicule automobile comprenant :
- le dispositif antivol de colonne de direction selon l'une des revendications précédentes, et
- un moteur électrique pour activer la roue à cames (3).

9. Véhicule automobile comprenant l'antivol électrique de colonne de direction selon la revendication précédente.
